# EUROPÄISCHE PATENTANMELDUNG

(11) **EP 1 880 929 A2**
(43) Veröffentlichungstag der Anmeldung: **23.01.2008**
(21) Anmeldenummer: 07014028.0
(22) Anmeldetag: 18.07.2007
(51) Int. Cl.: B62D 33/03, B62D 33/023

(54) **Bordwandaufbau für PKW-Anhänger**

(30) Priorität: 18.07.2006 DE 102006033106
(71) Anmelder: Stema Metalleichtbau GmbH, 01558 Grossenhain (DE)
(72) Erfinder: Schmid, Wolfgang, 01445 Radebeul (DE); Kieslich, Matthias, 01588 Großenhain (DE)
(74) Vertreter: Weissfloh, Ingo

(57) **Zusammenfassung**

Der Erfindung liegt das Problem zugrunde, einen Bordwandaufbau für PKW-Anhänger zu schaffen, der durch Zusatzelemente problemlos wesentlich in seiner Höhe vergrößert werden kann und somit insbesondere zum Transport voluminöser Stoffe wie Heu, leichter Gartenabfälle, wie Laub, abgeschnittener Äste und Zweige usw. dienen kann und dessen eine Bordwand gleichzeitig auch als Auffahrrampe und anderweitig einsetzbar ist.

Bei dem erfindungsgemäßen Bordwandaufbau für PKW-Anhänger mit mindestens teilweise abnehmbaren Bordwänden ist eine Bordwand 1, vorzugsweise die rückwärtige Bordwand 1, abnehmbar gestaltet und am Rahmen des Anhängers kippbar gelagert. An den vier Eckpunkten 4 des kastenförmigen Bordwandaufbaus 5 sind Einsteck- und Befestigungsmöglichkeiten für stabförmige Stützelemente 6 angeordnet in denen entsprechende Stützelemente 6 stecken. Zwischen den Stützelementen 6, außer im Bereich der Gitterbordwand 1, sind horizontale Befestigungsstäbe 7 vorgesehen, die eine Plane 8 halten.

Das Anwendungsgebiet der Erfindung ist der KFZ-Anhängerbau.

## Beschreibung

Bordwandaufbau für PKW-Anhänger mit mindestens teilweise abnehmbaren Bordwänden und weiteren Aufbauten mit eingehangenen Planen.

Der Bordwandaufbau im PKW-Anhängerbau ist durch Bordwände aus Holz oder Blech gekennzeichnet. Zur Vergrößerung des Transportraumes bei Fahrzeuganhängern wird in der DD 230 846 A1 eine Vorrichtung zum Aufsetzen auf die Beplankung vorgeschlagen. An Arretierungsbolzen oder Arretiervierkantprofilstählen befestigte und überlappt angeordnete Rahmengestelle, vorzugsweise mit Verkleidung aus Stahlblech oder Streckmetall, die durch Schrauben verstellbar bzw. durch Scharniere verbunden sind, ermöglichen eine Erweiterung des Transportraumes.

Der Erfindung liegt das Problem zugrunde, einen Bordwandaufbau für PKW-Anhänger zu schaffen, der durch Zusatzelemente problemlos wesentlich in seiner Höhe vergrößert werden kann und somit insbesondere zum Transport voluminöser Stoffe wie Heu, leichter Gartenabfälle, wie Laub, abgeschnittener Äste und Zweige usw. dienen kann und dessen eine Bordwand gleichzeitig auch als Auffahrrampe und anderweitig einsetzbar ist.

Die mit der Erfindung erzielten Vorteile bestehen insbesondere darin, dass neben den beschriebenen beispielhaften Einsatzgebieten ein wesentlich größerer Transportraum gegenüber herkömmlichen Ausführungsarten zur Verfügung gestellt werden kann. Die rückwärtige Bordwand ist auswechselbar und durch eine sogenannte Gitterbordwand leicht kippbar und kann somit als Auffahrrampe genutzt werden. Aufgrund der Ausführungsart der Gitterbordwand ist diese gleichzeitig als Durchwurf bzw. Sieb bei Gartenarbeiten einsetzbar. Der Einsatz als Durchwurf ist auch beim Einsatz als Bordwand möglich, indem die Gitterbordwand gelöst, abgekippt und durch einen Stab abgestützt wird. Anschließend kann transportiertes Material durch den Durchwurf gesiebt werden. Ein weiterer Vorteil der erfindungsgemäßen Ausführung des Bordwandaufbaus ist bei der Planenausführung dadurch gegeben, dass die oberen Befestigungsstäbe der Längsseitenwände aushängbar sind und im ausgehangenen Zustand an ihren Enden mit den Enden des oberen Befestigungsstabes der gegenüberliegenden Seite verbindbar sind. Somit ist zu transportierendes leichtes Material wie z. B. Heu oder Laub abdeckbar und wird nicht durch den Fahrtwind aus dem Hänger herausgeweht.

Vorteilhafte Ausgestaltungen des erfindungsgemäßen Bordwandaufbaus sind in den Ansprüchen 2 bis 5 aufgeführt. Bei der Weiterbildung nach Anspruch 2 sind an den vier Eckpunkten des kastenförmigen Bordwandaufbaus Einsteck- und Befestigungsmöglichkeiten für stabförmige Stützelemente mit entsprechenden Stützelementen vorgesehen, die an horizontalen Befestigungsstäben Planen als vergrößerte Seitenwand halten. Bei entsprechend hoher Ausführung der Stützelemente und Planen lässt sich das Ladevolumen des Anhängers wesentlich vergrößern. Nach Anspruch 3 ist die Plane am kastenförmigen Bordwandaufbau durch bekannte Befestigungselemente befestigt und somit abnehmbar. Die Plane ist mindestens über einen Befestigungsstab bis zum obersten Befestigungsstab geführt und dort schlaufenförmig an diesem befestigt. Der oberste Befestigungsstab ist in den Stützelementen einhängbar gestaltet und somit mit gesamter Plane abnehmbar. Bei der Weiterbildung nach Anspruch 4 besteht das Metallgitter der Gitterbordwand aus Streckmetall und die Bordwand erhält somit eine höhere Stabilität. Nach Anspruch 5 besitzen die Stützelemente mindestens eine Höhe, die der Breite des Anhängers entspricht. Die oberen Befestigungsstäbe der Längsseitenwände können samt der Plane ausgehangen und miteinander verbunden werden. Somit kann leichtes und voluminöses Material, wie Heu oder Laub, abgedeckt und sicher transportiert werden.

Ein Ausführungsbeispiel der Erfindung ist in der Zeichnung dargestellt und wird im folgenden näher beschrieben. Es zeigen:

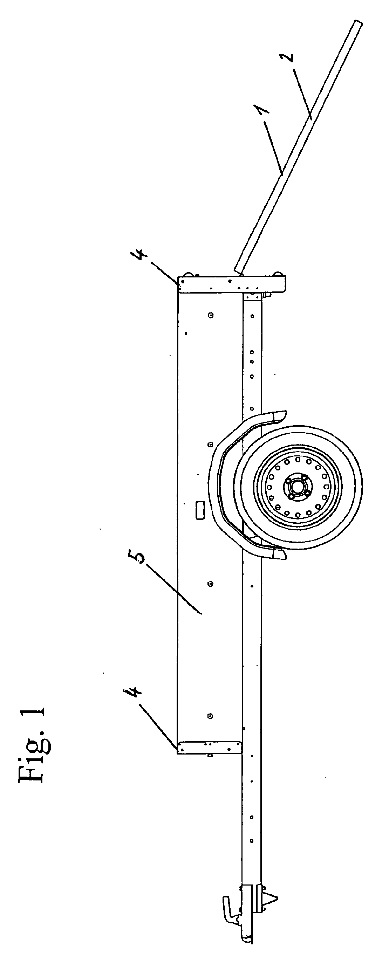

Fig. 1 die Seitenansicht des Anhängers ohne Planenaufbau und abgekippter Rückwand,

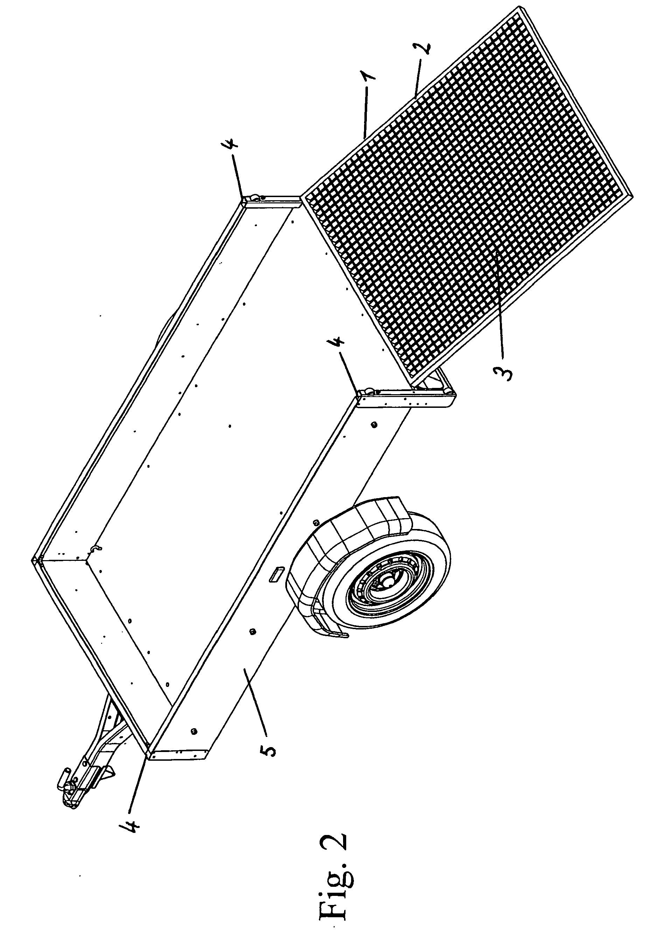

Fig. 2 die räumliche Draufsicht auf den Anhänger nach Fig. 1,

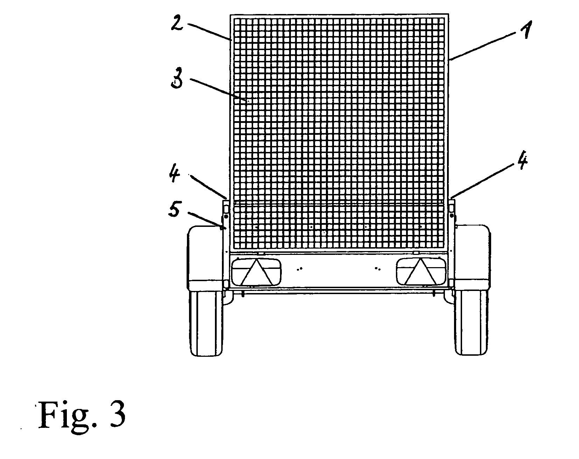

Fig. 3 die Ansicht auf die Rückseite des Anhängers mit hochgeklappter Rückwand,

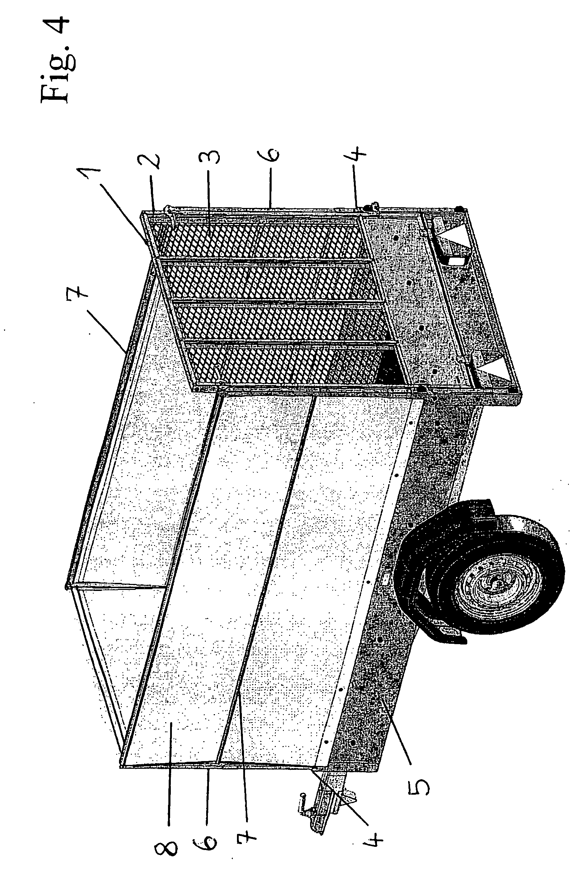

Fig. 4 die räumliche Draufsicht auf den Anhänger mit Planenaufbau und hochgeklappter Rückwand und

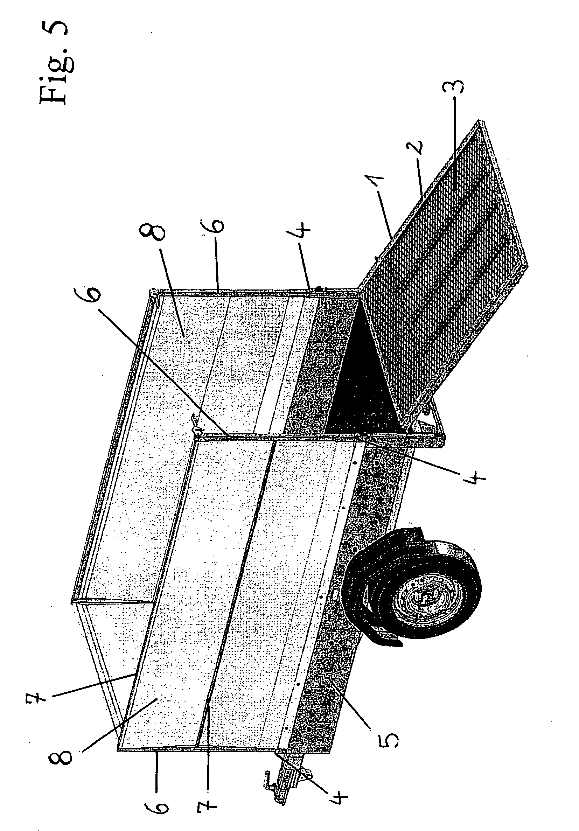

Fig. 5 die räumliche Draufsicht auf den Anhänger mit Planenaufbau und abgeklappter Rückwand.

Bei dem erfindungsgemäßen Bordwandaufbau für PKW-Anhänger mit mindestens teilweise abnehmbaren Bordwänden ist eine Bordwand 1, vorzugsweise die rückwärtige Bordwand 1, abnehmbar gestaltet und am Rahmen des Anhängers kippbar gelagert. Diese Bordwand 1 besteht aus einem Metallrahmen 2 mit mehreren Befestigungsmöglichkeiten zu den angrenzenden Bordwandaufbauten und ragt über die übrigen Bordwände hinaus. Der Metallrahmen 2 umschließt ein Metallgitter 3, vorzugsweise ein Streckmetall und bildet somit eine Gitterbordwand 1.

An den vier Eckpunkten 4 des kastenförmigen Bordwandaufbaus 5 sind Einsteck- und Befestigungsmöglichkeiten für stabförmige Stützelemente 6 angeordnet in denen entsprechende Stützelemente 6 stecken. Diese Stützelemente 6 besitzen vorzugsweise zusammen mit dem kastenförmigen Bordwandaufbau 5 eine Gesamthöhe von der Breite des Anhängers. Zwischen den Stützelementen 6, außer im Bereich der Gitterbordwand 1, also an der Vorderfront und an den Seitenwänden sind horizontale Befestigungsstäbe 7 vorgesehen. Der oberste Befestigungsstab 7 hält eine Plane 8, die zwischen dem obersten Befestigungsstab 7 und dem kastenförmigen Bordwandaufbau 5 angeordnet ist. Die Plane 8 ist am kastenförmigen Bordwandaufbau 5 durch bekannte Befestigungselemente abnehmbar befestigt und hinter mindestens einem Befestigungsstab 7 bis zum obersten Befestigungsstab 7 geführt und endet dort schlaufenförmig. Der oberste Befestigungsstab 7 ist in den Stützelementen 5 einhängbar und somit abnehmbar gestaltet.

Die oberen Befestigungsstäbe 7 der Längsseitenwände können im ausgehangenen Zustand an ihren Enden mit den Enden des oberen Befestigungsstabes 7 der gegenüberliegenden Seite mit einfachen Mitteln wie Klammern oder Schrauben verbunden werden. Hierdurch kann die Plane 8 nach Beendigung der Beladung des Anhängers aus den Stützelementen 6 ausgehangen und als Abdeckung des zu transportierenden Materials benutzt werden.

### Zusammenstellung der Bezugszeichen

- 1 -: Bordwand, Gitterbordwand
- 2 -: Metallrahmen
- 3 -: Metallgitter
- 4 -: Eckpunkte
- 5 -: kastenförmiger Bordwandaufbau
- 6 -: Stützelemente
- 7 -: Befestigungsstab
- 8 -: Plane

## Patentansprüche

1. Bordwandaufbau für PKW-Anhänger mit mindestens teilweise abnehmbaren Bordwänden,
**dadurch gekennzeichnet,**
**dass** eine Bordwand (1), vorzugsweise die rückwärtige Bordwand (1), abnehmbar und/oder am Rahmen des Anhängers kippbar gelagert ist, diese Bordwand (1) über die übrigen Bordwände hinausragt und diese Bordwand (1) aus einem Metallrahmen (2) mit mehreren Befestigungsmöglichkeiten zu den angrenzenden Bordwandaufbauten besteht, wobei der Metallrahmen (2) ein Metallgitter (3) umschließt und somit eine Gitterbordwand (1) bildet.

2. Bordwandaufbau für PKW-Anhänger nach Anspruch 1,
**dadurch gekennzeichnet,**
**dass** an den vier Eckpunkten (4) des kastenförmigen Bordwandaufbaus (5) Einsteck- und Befestigungsmöglichkeiten für stabförmige Stützelemente (6) mit entsprechenden Stützelementen (6) angeordnet sind und zwischen den Stützelementen (6), außer im Bereich der Gitterbordwand (1), horizontale Befestigungsstäbe (7) vorgesehen sind, wobei der oberste Befestigungsstab (7) eine Plane (8) hält, die zwischen obersten Befestigungsstab (7) und kastenförmigen Bordwandaufbau (5) angeordnet ist.

3. Bordwandaufbau nach Anspruch 2,
**dadurch gekennzeichnet,**
**dass** die Plane (8) am kastenförmigen Bordwandaufbau (5) durch bekannte Befestigungselemente abnehmbar befestigt ist und hinter mindestens einem Befestigungsstab (7) bis zum obersten Befestigungsstab (7) geführt ist und dort schlaufenförmig endet und der oberste Befestigungsstab (7) in den Stützelementen (5) einhängbar gestaltet ist.

4. Bordwandaufbau nach einem der vorhergehenden Ansprüche,
**dadurch gekennzeichnet,**
**dass** das Metallgitter (3) der Gitterbordwand (1) aus Streckmetall besteht.

5. Bordwandaufbau nach einem der vorhergehenden Ansprüche,
**dadurch gekennzeichnet,**
**dass** die Stützelemente (5) mindestens in ihrer Höhe der Breite des Anhängers entsprechen und die oberen Befestigungsstäbe (7) der Längsseitenwände im ausgehangenen Zustand an ihren Enden mit den Enden des oberen Befestigungsstabes (7) der gegenüberliegenden Seite verbindbar sind.
